# FASCICULE DE BREVET EUROPEEN

(11) **EP 0 710 595 B1**
(45) Date de publication et mention de la délivrance du brevet: **29.12.1999**
(21) Numéro de dépôt: 95402326.3
(22) Date de dépôt: 18.10.1995
(51) Int. Cl.: B60T 13/74

(54) **Frein électrique de stationnement de véhicule automobile**
Elektrische Parkbremse für ein Kraftfahrzeug
Electric parking brake for a motor vehicle

(30) Priorité: 03.11.1994 FR 9413132
(43) Date de publication de la demande: 08.05.1996
(73) Titulaire: MERITOR LIGHT VEHICLE SYSTEMS - FRANCE en abrégé: MERITOR LVS - FRANCE, 92082 Paris La Defense 2 (FR)
(72) Inventeur: Belmond, Jean-Marc, Nayemont les Fosses, F-88100 Saint Die (FR)
(74) Mandataire: Martin, Jean-Paul

(56) Documents cités:
- US-A- 3 613 356
- US-A- 3 809 191
- US-A- 4 817 463
- US-A- 4 865 165
- US-A- 5 180 038

## Description

La présente invention a pour objet un frein de stationnement de véhicule automobile.

Jusqu'à présent on a réalisé des freins de parc à commande manuelle au moyen d'une poignée habituellement placée entre les deux sièges avant, ou d'une pédale spécifique située à proximité du pédalier.

Ces freins présentent un encombrement notable, nécessitent des câbles longs et un système de palonnage, qui doivent être implantés entre la place du conducteur et le train arrière. Ils nécessitent également des réglages au montage et/ou au cours de la vie du véhicule, et leur efficacité optimum dépend de la force physique du conducteur et des contraintes de dimensionnement issues des choix d'esthétique véhicule effectués par le constructeur.

Le brevet US-A-5.180.038 décrit un dispositif dans lequel l'action sur l'organe de freinage est obtenue par l'intermédiaire d'un câble, un système d'aide au serrage interne au moto-réducteur étant prévu, grâce à un ressort. Ce dispositif nécessite un actionneur distinct pour chaque roue du véhicule et par conséquent il présente l'inconvénient d'obliger à gérer le problème des dispersions d'un moto-réducteur à l'autre, en prenant en compte une source de dispersions supplémentaires dûe aux câbles.

L'invention a pour but de proposer un frein de parc agencé de manière à éviter ces inconvénients.

Conformément à l'invention, le frein de stationnement de véhicule automobile comprend les caractéristiques mentionnées à la revendication 1.

L'encombrement de ce frein électrique est considérablement diminué par rapport aux freins mécaniques habituels, d'où un gain en espace de rangement, de confort et d'habitabilité du véhicule. En outre les câbles longs des freins à mains habituels sont remplacés par des tronçons de câbles très courts, grâce au positionnement du boîtier au niveau du train arrière du véhicule. Il en résulte une amélioration du rendement en effort par réduction des pertes généralement observées sur les chemins de câbles longs et comportant des courbures plus ou moins importantes.

Le moteur électrique du motoréducteur est par exemple du type utilisé pour les lève-vitre, ou les sièges, son arbre de sortie portant un pignon d'entraînement de la roue dentée ou d'un pignon intermédiaire.

Suivant un mode de réalisation de l'invention, le système vis-écrou(s) comprend un écrou traversant axialement la roue, profilé pour pouvoir être entraîné par celle-ci en rotation, et dont les parties opposées s'étendant de part et d'autre de la roue, sont pourvues de filetages inverses et reçoivent des vis à pas opposés, bloquées en rotation axiale et reliées aux parties terminales des câbles par des chapes dans lesquelles sont logées lesdites parties terminales et les têtes des vis, le système vis-écrous étant irréversible grâce à un profil approprié des filetages.

L'écrou présente avantageusement un profil complémentaire de celui d'une ouverture axiale de passage dans la roue, un jeu fonctionnel étant réservé entre le pourtour de l'ouverture et le profil de l'écrou.

Ce jeu fonctionnel entre l'écrou et la roue, tout en maintenant de manière satisfaisante la capacité d'entraînement de l'écrou par la roue, permet d'éviter de faire varier l'entraxe entre la roue et le pignon lors des manoeuvres de serrage ou de desserrage du frein. En effet on comprend que l'absence d'un tel jeu pourrait provoquer des déplacements transversaux de la roue, donc des variations parasites de l'entraxe entre cette dernière et le pignon de sortie du moteur, ce qui serait nuisible au bon fonctionnement du frein. Ce jeu permet donc d'absorber les dispersions d'alignement.

Suivant un autre mode de réalisation du frein le système vis-écrous comporte une vis constituée de deux parties opposées de filetages inverses, s'étendant de part et d'autre de la roue dentée et d'une partie centrale profilée pour permettre l'entraînement de la vis en rotation par la roue, et ce système comprend également deux écrous coiffant chacun une partie de la vis, ainsi que des moyens pour bloquer les écrous en rotation, ces écrous étant reliés aux extrémités respectives des câbles.

D'autres particularités et avantages de l'invention apparaîtront au cours de la description qui va suivre, faite en référence aux dessins annexés qui en illustrent une forme de réalisation à titre d'exemple non limitatif.
La figure 1 est une vue en coupe partielle et élévation longitudinale d'une forme de réalisation du frein de stationnement du véhicule automobile selon l'invention.
La figure 2 est une section transversale suivant 2/2 de la Fig.1.
La figure 3 est une vue en élévation et coupe partielle d'un arrêt de gaine de la Fig.1.
La figure 4 est une section transversale suivant 4/4 de la Fig.1 illustrant l'arrêt en rotation des vis se déplaçant en translation dans l'écrou.
La figure 5 est une vue simplifiée analogue à la Fig.1, d'un second mode de réalisation du frein selon l'invention.
La figure 6 est une vue mi-coupe longitudinale mi-élévation et avec arrachements d'une réalisation industrielle d'un frein conforme au mode de réalisation de la Fig.5.
Les figures 7, 8 et 9 sont des vues en coupe partielle respectivement suivant 7-7, 8-8 et 9-9 de la Figure 6.

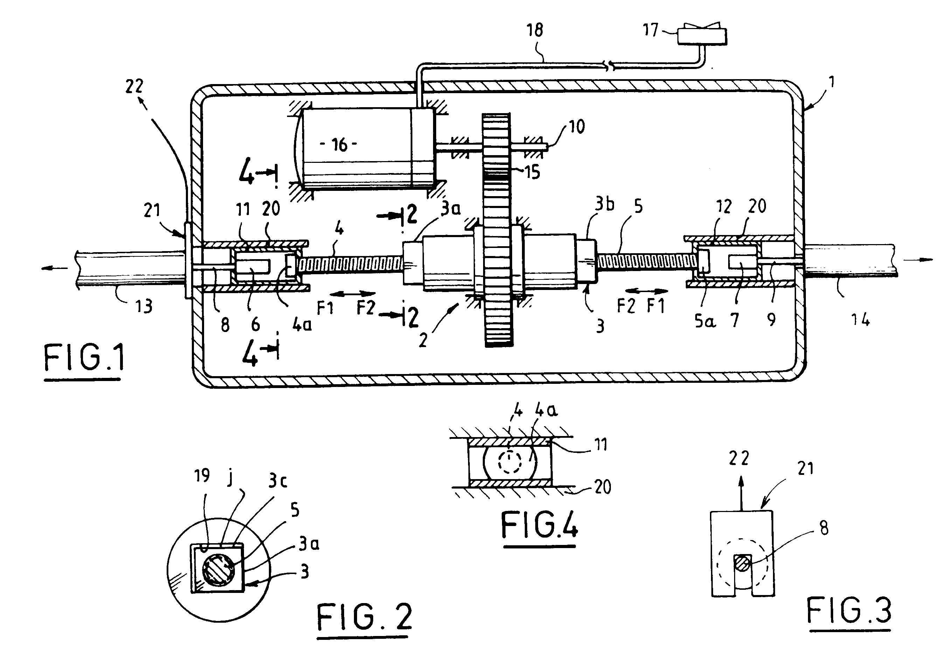

Le frein de stationnement de véhicule automobile représenté aux Fig. 1 et 2 comprend un boîtier 1 destiné à être monté préférentiellement mais de façon non limitative à proximité de la traverse arrière (non représentée) du véhicule, et qui contient une roue dentée 2, un écrou 3 traversant axialement la roue 2 et pouvant coulisser en translation de part et d'autre de celle-ci. L'écrou 3 est constitué de deux parties 3a, 3b, qui s'étendent de part et d'autre de la roue 2 coaxialement à celle-ci et sont taraudées l'une en pas à gauche et l'autre en pas à droite. Ces deux parties 3a, 3b reçoivent des vis 4, 5 respectives, bloquées en rotation et reliées aux parties terminales 6, 7 de câbles de freinage respectifs 8, 9 par des chapes 11, 12, montées dans des supports 20 fixés intérieurement au boîtier 1. Ces chapes contiennent les têtes 4a, 5a des vis 4, 5 et les parties terminales 6, 7 des câbles 8, 9, qui sont reliés à des organes de freinage correspondants non représentés.

Les câbles 8, 9 traversent les parois latérales du boîtier 1 et, à l'extérieur de celui-ci, sont logés dans des gaines 13, 14.

La roue dentée 2 engrène avec un pignon 15 monté sur un arbre 10 de sortie d'un moteur électrique 16 logé dans le boîtier 1, comme les éléments précités (à l'exception des gaines 13, 14 et des tronçons de câbles correspondants). Ce moteur 16 est alimenté par la batterie du véhicule (non représentée) et peut être par exemple de 12 Volts. Le moteur 16 peut être mis en marche à partir d'un bouton 17 de commande manuelle auquel il est relié par une connexion électrique 18, ce bouton de commande 17 étant placé dans le poste de conduite du véhicule, à proximité du conducteur.

L'écrou 3 présente un profil 3c complémentaire de celui d'une ouverture axiale 19 de passage dans la roue 2, ces deux profils pouvant être par exemple carrés comme représenté à la Fig.2. Un jeu fonctionnel j est réservé entre le pourtour de l'ouverture 19 et le profil de la partie 3c.

Les vis 4, 5 peuvent être bloquées en rotation par tout moyen approprié, par exemple une forme de tête de vis 4a-5a comme représenté à la Fig.4, indexées en rotation dans des logements complémentaires des chapes 11, 12, lesquelles peuvent coulisser dans des rainures longitudinales internes des supports 20.

Les gaines 13, 14 sont munies d'arrêts sur le boîtier 1, l'un 21 de ceux-ci étant amovible, par exemple au moyen d'un câble 22 relié à une tirette d'extraction manuelle non représentée. Cet agencement permet, par traction sur la tirette et enlèvement de l'arrêt 21, de faire rentrer la gaine 13 à l'intérieur du boîtier 1 pour permettre si nécessaire un desserrage de secours en cas de panne du système électrique (16, 17). Dans ce cas, la longueur de guidage (non représentée) du câble 8 sous tension se trouve réduite, ce qui provoque la détente du câble 8 et une translation de l'écrou dans la roue allant dans le sens de la détente du câble 9.

Les vis 4 et 5 ont des pas opposés de sorte que, du fait du double taraudage de pas opposé de l'écrou 3, une rotation de ce dernier dans un sens ou dans l'autre entraîne, soit le déplacement des vis 4, 5 en translation dans le sens qui les expulse de la roue 2 (flèches F1) donc diminue la tension des câbles 8, 9 et desserre les organes de freinage, soit dans le sens opposé (flèches F2). Dans ce cas, les vis 4, 5 rentrent à l'intérieur des parties correspondantes 3a, 3b de l'écrou 3, ce qui provoque une augmentation de la tension des câbles 8, 9 et donc le serrage des organes de freinage.

Le bouton de commande 17 possède trois états (repos, serrage, desserrage) à l'image de ceux qui sont utilisés actuellement sur les commandes de lève-vitre. L'équivalent de la fonction de commande impulsionnelle sur les lève-vitre peut être envisagé pour la commande de serrage ou de desserrage du frein selon l'invention.

Les câbles 8, 9 reliant les organes de freinage au mécanisme de serrage (2, 3, 4, 5) sont classiques, du type monotoron, avec des gaines 13, 14 simple enroulement. D'autres types de câbles et de gaines sont envisageables en fonction des besoins en réserve d'énergie au serrage (multitorons, gaines double enroulement... ). Les arrêts de gaines sont réalisés sur les parties fixes des organes de freinage d'une part, et sur le boîtier 1 du mécanisme de freinage d'autre part. La tirette de secours pour le retrait de l'arrêt amovible 21 est positionnée à un emplacement d'accès facile pour l'utilisateur.

Le moteur 16 peut être du type utilisé non seulement pour les lève-vitres mais aussi pour la commande des sièges. Il entraîne un réducteur simple du type pignon 15 roue 2. Une commande effectuée à partir du bouton 17 met en marche dans l'un ou l'autre sens le moteur 16, et le réducteur constitué par le pignon 15 et la roue associée 2 entraîne l'écrou 3 en rotation. La possibilité de déplacement en translation axiale de l'écrou 3 dans la roue 2 présente l'avantage d'empêcher l'apparition d'un effort axial sur la roue 2 au cas où les lois course-effort suivies par les vis 4, 5 seraient différentes, ce qui entraînerait des effets nuisibles.

Le maintien du frein en position serrée est obtenu grâce à l'irréversibilité du système vis 4, 5 - écrou 3 (dispositif à action purement mécanique) ceci du fait que, de manière connue en soi, les profils des filetages des vis 4, 5 et des taraudages de l'écrou 3 sont réalisés de manière appropriée. De ce fait, lorsque le moteur 16 n'est plus actionné, le mécanisme reste en position de serrage ou de desserrage des organes de freinage, tant que le moteur 16 n'a pas été actionné en sens inverse.

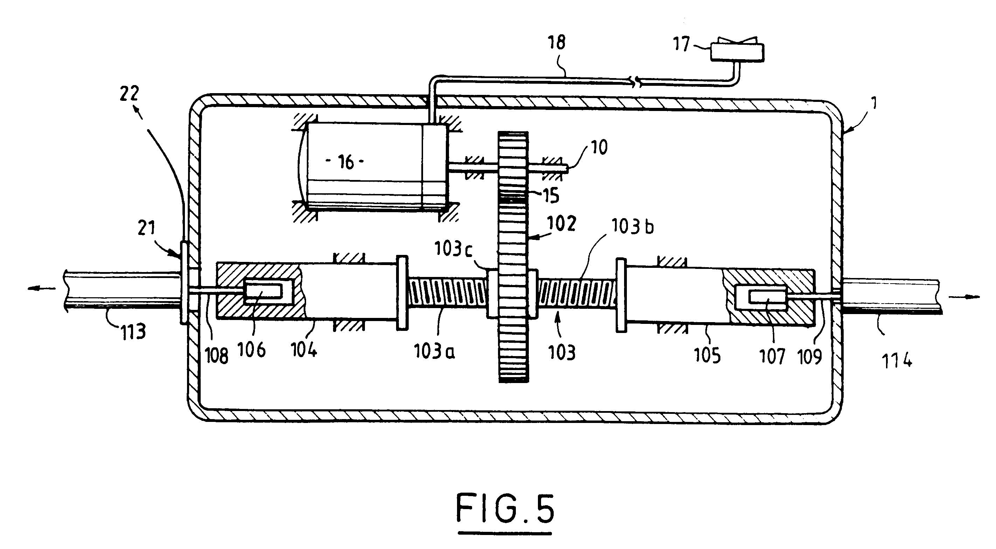

Le second mode de réalisation du frein selon l'invention, schématiquement représenté à la Fig.5, diffère du précédent par le fait que la roue dentée 2 entraîne non un écrou, mais une vis 103. Cette dernière est constituée de deux parties opposées 103a, 103b, de filetages inverses, s'étendant de part et d'autre de la roue 102 et d'une partie centrale 103c, laquelle est profilée pour permettre l'entraînement de la vis 103 en rotation par la roue 102.

Ce système comprend également deux écrous 104, 105 coiffant chacun une partie 103a, 103b de la vis 103 et reliés aux noix 106, 107 d'extrémités des câbles 108, 109. Ces noix peuvent être, comme représenté, logées dans les écrous 104, 105, tandis que les câbles 108, 109 sont guidés dans des gaines 113, 114 à l'extérieur du boîtier 1. Des moyens, non représentés à la Fig.5, sont également prévus pour bloquer les écrous 104, 105 en rotation quand ceux-ci sont entraînés en translation par la rotation de la vis 103.

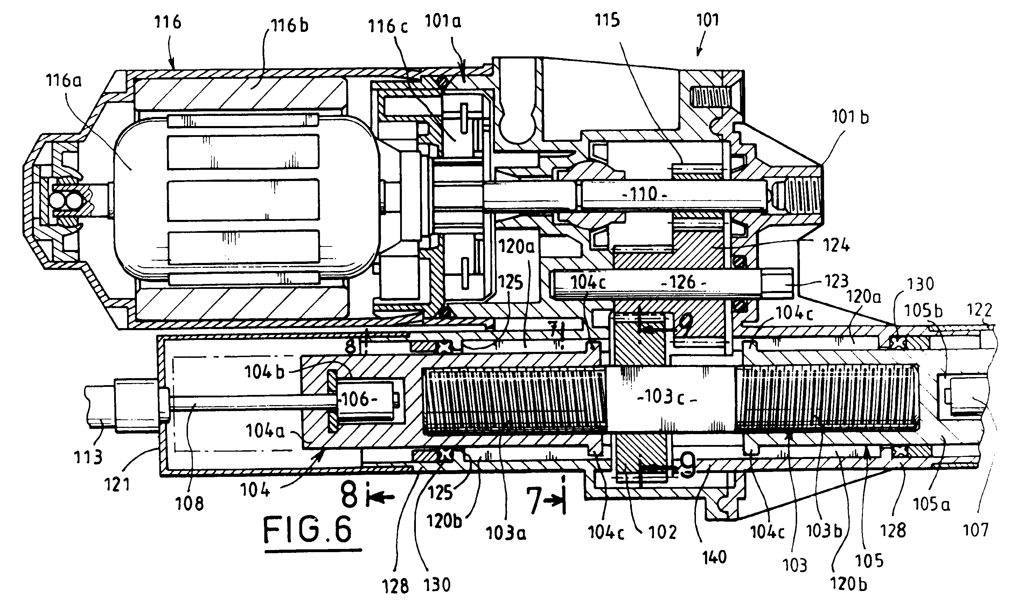

Le frein de stationnement de véhicule automobile représenté aux figures 6 à 9 est réalisé suivant le principe de la Fig.5.

Il comprend un boîtier 101 formé de deux demi-carters 101a et 101b destiné à être monté préférentiellement, mais non obligatoirement, à proximité de la traverse arrière du véhicule et qui contient une roue dentée 102, une vis 103 traversant axialement la roue 102 et pouvant coulisser en translation de part et d'autre de celle-ci.

La vis 103 est constituée de deux parties 103a et 103b filetées l'une à gauche et l'autre à droite, s'étendant de part et d'autre de la roue 102 coaxialement à celle-ci, et d'une partie centrale 103c permettant l'indexage en rotation de la vis 103 dans la roue 102 avec un jeu fonctionnel j de coulissement entre le profil 103c et l'ouverture 119 de la roue 102. Les deux parties 103a et 103b sont coiffées par les écrous 104, 105 respectifs, bloqués en rotation et reliés aux parties terminales 106, 107 des câbles de freinage 108, 109, par des têtes respectives 104a, 105a dans lesquelles sont formés des logements qui contiennent des noix 106, 107 solidaires des extrémités des câbles 108, 109 reliés à des organes de freinage correspondants non représentés.

Les câbles de freinage traversent des arrêts de gaine 121, 122 et, à l'extérieur de ceux-ci sont logés dans des gaines 113, 114. La section tubulaire des arrêts de gaine 121, 122 permet leur emmanchement sur les demis carters respectifs 101a, 101b.

La roue dentée 102 engrène sur un pignon intermédiaire 124 assurant une réduction intermédiaire. L'arbre 126 du pignon intermédiaire 124 comporte une extrémité 123 de forme adaptée, par exemple hexagonale, accessible depuis l'extérieur du boîtier 101 et destinée à permettre un desserrage de secours en cas de panne du système électrique.

Le pignon intermédiaire 124 engrène avec un pignon 115 monté sur un arbre 110 de sortie d'un moteur électrique 116 emmanché sur le demi-carter 101a. Ce moteur 116, d'un type similaire au moteur 16 et dont on voit le rotor 116a, le stator 116b etle boîtier collecteur 116c, est alimenté par la batterie du véhicule (non représentée) et peut être par exemple de 12 Volts. Le moteur 116 peut être mis en marche à partir du poste de conduite comme dans la première forme de réalisation précédemment décrite.

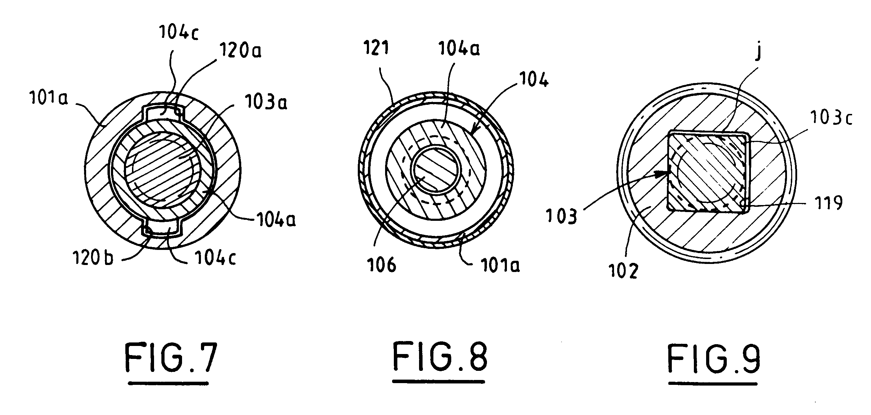

La vis 103 présente un profil central 103c complémentaire de celui de l'ouverture axiale 119 de passage dans la roue 102, ces deux profils pouvant être par exemple carrés comme représenté à la Fig.9. Le jeu axial de la roue 102 est limité, du côté de l'écrou 105, par un cylindre tronqué 140, monopièce avec le demi-carter 101b et traversé par le profil 103c. Le pignon 124 s'engage dans la partie tronquée du cylindre de butée 140, qui est tel qu'il empêche la roue 102 de venir au contact du pignon 124.

Les écrous 104, 105 sont bloqués en rotation par tout moyen approprié, par exemple pour chaque écrou deux rainures longitudinales 120a et 120b, réalisées dans les demi-carters 101a, 101b, dans lesquelles peuvent coulisser deux ergots respectifs 104c solidaires des écrous 104, 105, comme représenté sur les Fig.6 et 7. Des butées radiales 125 limitent les rainures 120a, 120b à l'opposé des ergots 104c et servent d'arrêts de fin de course aux écrous 104, 105. Au-delà des butées 125, des joints d'étanchéité 130 sont interposés entre les écrous et les parois d'embouts 128 contenant les écrous 104, 105 et les parties filetées 103a, 103b.

Les gaines 113, 114 sont arrêtées sur le boîtier 101 par des arrêts de gaine 121, 122 de forme tubulaire qui viennent s'emmancher sur les embouts 128 des demi-carters respectifs 101a, 101b (Fig.6 et 8).

Le principe de commande du moteur et les arrêts de gaine côté organes de freinage restent identiques à ce qui est décrit dans la première réalisation à un écrou et deux vis.

Une commande effectuée à partir du bouton de commande (non représenté) met en marche le moteur 116 dans un sens ou dans l'autre, et le réducteur entraîne la vis 103 en rotation.

Les écrous 104 et 105 ont des pas opposés de sorte que, du fait des parties filetées respectives 103a et 103b, une rotation de la vis 103 dans un sens ou dans l'autre entraîne, soit le déplacement des écrous en translation dans le sens qui les éloigne de la roue 102 donc diminue la tension des câbles 108, et desserre les organes de freinage, soit dans le sens opposé. Dans ce dernier cas, les écrous 104, 105 s'engagent sur les parties respectives 103a, 103b de la vis 103 de façon que de plus en plus de filets soient en prise, ce qui provoque une augmentation de la tension des câbles 108, 109 et donc le serrage des organes de freinage.

La possibilité de déplacement en translation de la vis 103 dans la roue 102 présente l'avantage d'empêcher l'apparition d'un effort axial sur la roue 102 au cas où les lois course-effort de montée en tension des câbles 108, 109 seraient différentes, ce qui entraînerait des effets nuisibles comme dans la réalisation des Fig.1 à 4.

Les avantages exposés dans le cas de la première réalisation décrite (un écrou 3, deux vis 4, 5) sont également obtenus avec les réalisations des Fig.5 à 9.

Outre les avantages techniques mentionnés cidessus, le frein selon l'invention présente les suivants:
a) Ce mécanisme de frein ne nécessite pas de réglage, ni au montage ni au cours de la vie du véhicule.
   Le dispositif est autoéquilibré en effort, entre les deux organes de freinage grâce à la possibilité de translation de l'écrou 3 ou de la vis 103 dans la roue 2.
   Ce système ne comporte pas de trou dans le tunnel à reboucher, ce qui supprime les éléments d'insonorisation nécessaires avec les freins habituels, ainsi que la plaque de fermeture.
   Il n'existe plus d'effort à reprendre sur le tunnel, ce qui évite la mise en place d'une plaque de renfort. Toute différenciation de conduite à droite-conduite à gauche disparaît, et une standardisation devient donc possible. Le montage du véhicule est simplifié et on obtient grâce à l'invention un allègement très important des contraintes d'intégration de style.
b) Du côté de l'utilisateur, le frein selon l'invention présente d'autres avantages :
   - efficacité optimum quelles que soient les capacités physiques du conducteur,
   - confort sonore amélioré (suppression du trou dans le tunnel),
   - implantation de la commande de vitesse optimisable,
   - pas de différence de loi course-effort à gérer à la commande du frein, quels que soient les organes (tambours, disques ou duo-servos) sur lesquels on agit.
c) Les efforts sont autoéquilibrés entre roue gauche et roue droite, les efforts principaux étant localisés sur le système vis-écrous-chapes.

Le système de freinage selon l'invention peut être utilisé dans le cadre d'un dispositif de sécurité passive, en ce sens que la combinaison de la détection d'une absence du conducteur et d'un mouvement du véhicule peut provoquer automatiquement le serrage du frein. Compte tenu de l'équilibrage des efforts obtenu entre l'organe gauche et l'organe droit, c'est à dire entre les roues gauche et droite, le système de freinage conforme à l'invention peut être couplé avec un dispositif "ABS" (marque déposée) en utilisation étendue au freinage de secours. Enfin, il est possible de moduler le desserrage pour les démarrages en côte, cette modulation pouvant être manuelle ou programmée en fonction du couple moteur ou roue.

## Revendications

1. Frein de stationnement de véhicule automobile, comprenant
a) un boîtier (1; 101) qui contient une roue dentée (2; 102) mécaniquement liée à un système vis-écrou(s) (3, 4, 5; 103, 104, 105) coaxial à la roue, dont l'un des éléments comporte des filetages inverses coopérant avec l'autre élément et qui peut être entraîné en rotation par la roue en entraînant le second en translation, ce système s'étendant axialement de part et d'autre de la roue à l'intérieur de laquelle l'élément entraîné en rotation est mobile en translation de part et d'autre de ladite roue,
b) des câbles (8, 9; 108, 109) traversant le boîtier de part et d'autre de la roue, respectivement reliés d'une part à l'élément mobile en translation correspondant des systèmes vis-écrou(s) ainsi que d'autre part à des organes de freinage, gauche et droit en réalisant ainsi un équilibrage des efforts entre organe gauche et organe droit,
c) un motoréducteur électrique (16; 116) d'entraînement de la roue en rotation, relié à un bouton (17) de commande pouvant être actionné à partir du poste de conduite du véhicule, afin que la rotation de la roue puisse provoquer un rapprochement ou un écartement des câbles selon le sens de rotation du moteur et de ladite roue et donc un serrage ou un desserrage des organes de freinage.

2. Frein selon la revendication 1, caractérisé en ce que le système vis-écrou(s) comprend un écrou (3) traversant axialement la roue (2), profilé pour pouvoir être entraîné par celle-ci en rotation, et dont les parties opposées (3a, 3b) s'étendant de part et d'autre de la roue (2), sont pourvues de filetages inverses et reçoivent des vis (4, 5) à pas opposés, bloquées en rotation axiale et reliées aux parties terminales (6, 7) des câbles (8, 9) par des chapes (11, 12) dans lesquelles sont logées lesdites parties terminales (6, 7) et les têtes (4a, 5a) des vis, le système vis-écrous étant irréversible grâce à un profil approprié des filetages.

3. Frein selon la revendication 2, caractérisé en ce que l'écrou (3) présente un profil (3c) complémentaire de celui d'une ouverture axiale (19) de passage dans la roue (2), un jeu fonctionnel (j) étant réservé entre le pourtour de l'ouverture et le profil de l'écrou.

4. Frein selon la revendication 3, caractérisé en ce que les vis (15) sont bloquées en rotation par des formes des têtes desdites vis, reçues dans des logements complémentaires des chapes (11, 12), lesquelles peuvent coulisser dans des rainures longitudinales internes de supports (20) fixés intérieurement au boîtier.

5. Frein selon la revendication 1, caractérisé en ce que le système vis-écrous comporte une vis (103) constituée de deux parties opposées (103a, 103b) de filetages inverses, s'étendant de part et d'autre de la roue dentée (102) et d'une partie centrale (103c) profilée pour permettre l'entraînement de la vis en rotation par la roue (102), et ce système comprend également deux écrous (104, 105) coiffant chacun une partie (103a, 103b) de la vis, ainsi que des moyens pour bloquer les écrous en rotation, ces écrous étant reliés aux extrémités respectives des câbles (108, 109).

6. Frein selon la revendication 5, caractérisé en ce qu'il comporte un pignon intermédiaire (124) monté entre un pignon (115) de sortie du moteur (116) et la roue dentée (102), avec lesquels il est en prise.

7. Frein selon l'une des revendications 5 et 6, caractérisé en ce que les écrous (104, 105) sont pourvus de têtes (104a, 105a) dans lesquelles sont ménagés des logements (104b,105b) contenant chacun une noix (106, 107) de fixation de l'extrémité du câble correspondant (108, 109), et en ce que des arrêts de gaine tubulaires (121, 122) sont emmanchés sur le boîtier (101) et traversés chacun par le câble respectif en servant de butée d'arrêt à des gaines (113, 114) enveloppant les câbles à l'extérieur du boîtier.

8. Frein selon la revendication 7, caractérisé en ce que lesdits moyens de blocage des écrous (104, 105) en rotation comprennent des ergots (104c) saillant latéralement des écrous et coulissant dans des rainures longitudinales (120a, 120b) ménagés dans la paroi intérieure du boîtier (101), des butées (125) de fin de course des ergots et des écrous étant agencées aux extrémités des rainures.

9. Frein selon la revendication 8, caractérisé en ce que l'arbre (126) du pignon intermédiaire (124) présente une extrémité (123) accessible de l'extérieur du boîtier (101) et profilée pour permettre une mise en rotation de cet arbre de l'extérieur par un outil approprié, afin de procéder si nécessaire à un desserrage de secours.

10. Frein selon l'une des revendications 1 et 5, caractérisé en ce que le motoréducteur électrique (16; 116), par exemple du type prévu pour un lève-vitre ou un siège, possède un arbre (10; 110) de sortie qui porte un pignon (15; 115) engrénant avec la roue dentée (2) ou avec le pignon intermédiaire (124).

11. Frein selon l'une quelconque des revendications précédentes, dans lequel les sections des câbles (108, 109) extérieures au boîtier (1; 101) sont revêtues de gaines (113, 114) munies d'arrêts sur le boîtier, caractérisé en ce que l'un (21) des arrêts est amovible, par exemple au moyen d'une tirette d'extraction manuelle, afin que la gaine puisse rentrer dans le boîtier pour permettre un desserrage de secours.

12. Frein selon l'une des revendications 5 à 11, caractérisé en ce que le boîtier (101) est constitué de deux demi-boîtiers (101a, 101b) dans lesquels s'étendent l'arbre (110) de sortie du moteur (16; 116) l'arbre (126) du pignon intermédiaire (124) et la vis (103), et le moteur (16; 116) est monté sur l'un (101a) de ces demi-boîtiers tandis que chaque arrêt de gaine (121, 122) est emmanché sur un embout (128) de chaque demi-boîtier.

## Claims

1. Parking brake for a motor vehicle comprising:
a casing (1;101) containing a cog wheel (2;102) mechanically linked to a screw-nut(s) system (3,4,5;103,104,105) co-axial to the cog wheel, of which one of the components comprises reverse threads co-operating with the other component and which can be rotation-actuated by the wheel actuating the second by translatory motion, this system extending axially on both sides of the wheel inside which the rotation-actuated component is movable by translatory motion on both sides of the said wheel,
cables (8,9;108,109) going through the casing on both sides of the wheel, respectively linked on the one hand to the element moving in translation and corresponding to the screw-nut(s) system as well as, on the other hand, to braking members, left and right, thus realising a balance of the stresses between left and right members,
an electrical geared motor (16,116) rotation-actuating the wheel and linked to a control knob (17) which can he operated from the vehicle dashboard, so that the rotation of the wheel can cause a coming-together or a separation of the cables according to the rotation direction of the motor and of the said wheel and thus, a tightening or loosening of the braking members.

2. Brake according to claim 1, **characterised in that** the screw-nut(s) system comprises a nut (3) going axially through the cog wheel (2) and shaped in order to be rotation-actuated by it and whose opposing parts (3a,3b) extend on both sides of the cog wheel (2) and are provided with reverse threads and receive screws (4,5) with opposite pitches, locked in axial rotation and linked to the end parts (6,7) of the cables (8,9) by covers (11,12) in which the said end parts are located (6,7) and the heads (4a,5a) of the screws, the screw-nuts system being irreversible due to a suitable profile of the threads.

3. Brake according to claim 2, **characterised in that** the nut (3) has a profile (3c) complementary to that of an axial passage opening (19) in the cog wheel (2), a functional clearance (j) being available between the periphery of the opening and the nut profile.

4. Brake according to claim 1, **characterised in that** the screws (15) are locked in rotation by the shapes of the heads of the said screws, received in the supplementary housings of the covers (11,12), which can slide in the internal longitudinal grooves of the supports (20) fitted inside the casing.

5. Brake according to claim 1, **characterised in that** the screw-nuts system comprises a screw (103) made of two opposite parts (103a,103b) with reverse threads, extending on both sides of the cog wheel (102) and a central part (103c) shaped to allow the actuation of the screw in rotation by the cog wheel (102) and this system also comprises two nuts (104,105) each topping a part (103a,103b) of the screw, as well as means for locking the nuts in rotation, these nuts being linked to the respective ends of the cables (108,109).

6. Brake according to claim 5 , **characterised in that** it comprises a transmission gear wheel (124) fitted between a motor (116) output gear (115) and the cog wheel (102) with which it is engaged.

7. Brake according to one of claims 5 and 6, **characterised in that** the nuts (104,105) are provided with heads (104a,105a) in which housings (104b,105b) are provided, each containing a fitting stop (106,107) for the end of the corresponding cable (108,109), and in that tubular sheath stops (121,122) are shrunk on the casing (101) and each crossed by the respective cable used as a crash stop for sheaths (113,114) wrapping the cables outside the casing.

8. Brake according to claim 7, **characterised in that** the said means for lacking the nuts (104,105) in rotation comprise nibs (104c) protruding laterally from the nuts and sliding in longitudinal grooves (120a,120b) provided in the inside wall of the casing (101), stops (125) for the travel end of the nibs and nuts being fitted at the ends of the grooves.

9. Brake according to claim 8, **characterised in that** the axle (126) for the transmission gear wheel (124) has an end (123) accessible from outside the casing (101), and is shaped to allow rotation of this axle from outside with a suitable tool in order to proceed, if necessary, to an emergency loosening.

10. Brake according to one of claims 1 and 5, **characterised in that** the electrical geared motor (16;116), for instance of the type provided for a window crank or for a seat, has an output shaft (10,110) which has a gear (15;115) engaging with the cog wheel (2) or with the transmission gear wheel (124).

11. Brake according to any one of the previous claims, in which the cable sections (108,109) outside the casing (1;101) are covered with sheaths (113,114) fitted with stops on the casing, **characterised in that** one (21) of the stops is removable, for instance with a hand drawing pull, so that the sheath can go back inside the casing to permit an emergency loosening.

12. Brake according to one of claims 5 to 11, **characterised in that** the casing (101) is made up of two half-casings (101a,101b) in which there are the output shaft (110) of the motor (16;116), the shaft (126) of the transmission gear wheel (124) and the screw (103), and the motor (16;116) is fitted on one (101a) of these half-casings whilst each sheath stop (121,122) is shrunk on an end joint (128) of each half-casing.

## Patentansprüche

1. Parkbremse für ein Kraftfahrzeug, aufweisend:
a) Ein Gehäuse (1, 101), welches ein Zahnrad (2; 102) enthält, das mechanisch mit einem Schraubenmuttersystem (3, 4, 5; 103, 104, 105) koaxial zu dem Rad verbunden ist, wobei eines der Systemelemente ein entgegengesetzt verlaufendes Gewinde aufweist, welches mit dem anderen Element zusammenwirkt, und das durch das Rad in Drehung versetzt werden kann, indem das zweite in Translationsbewegung versetzt wird, wobei dieses System sich axial beiderseits des Rads erstreckt, von welchem das drehangetriebene Element beiderseits des Rads translationsbeweglich ist,
b) Kabel (8, 9; 108, 109), welche das Gehäuse beiderseits des Rads durchsetzen und jeweils einerseits verbunden sind mit dem entsprechenden translationsbeweglichen Element des Schraubenmuttersystems und andererseits mit linken und rechten Bremsorganen unter Verwirklichung eines Gleichgewichts der Kräfte zwischen dem linken Organ und rechten Organ,
c) einen elektrischen Getriebemotor (16; 116) zum Drehantrieb des Rads, der mit einer Steuertaste (17) verbunden ist, die ausgehend vom Lenkrad des Fahrzeugs betätigbar ist, damit die Drehung des Rads ein Annähern oder Abrücken der Kabel entsprechend der Drehrichtung des Motors und des Rads, um damit ein Anstellen oder Abrücken der Bremsorgane auszulösen.

2. Bremse nach Anspruch 1, dadurch gekennzeichnet, daß das Schraubenmuttersystem eine das Rad (2) durchsetzende Mutter (3) umfaßt, die mit einem Profil versehen ist, um durch das Rad in Drehung versetzt werden zu können, und deren gegenüberliegende Teile (3a, 3b), die sich beiderseits des Rads (2) erstrecken, mit entgegengesetzt verlaufenden Gewinden versehen sind und Schrauben (4, 5) mit entgegengesetztem Gewindegang aufnehmen, die bezüglich axialer Drehung festgesetzt und mit zwei Endteilen (6, 7) der Kabel (8, 9) durch Kappen (11, 12) verbunden sind, in welchen die Endteile (6, 7) und die Köpfe (4a, 5a) der Schrauben untergebracht sind, wobei das Schraubenmuttersystem durch ein geeignetes Profil der Gewinde nicht umsteuerbar ist.

3. Bremse nach Anspruch 2, dadurch gekennzeichnet, daß die Mutter (3) ein Profil (3c) komplementär zu demjenigen einer axialen Durchgangsöffnung (19) in dem Rad (2) aufweist, wobei ein Funktionsspiel (j) zwischen dem Umfang der Öffnung und dem Profil der Mutter bereitgehalten ist.

4. Bremse nach Anspruch 3, dadurch gekennzeichnet, daß die Schrauben (15) durch die Formen der Schraubenköpfe bezüglich einer Drehung blockiert sind, die in komplementären Lagern der Kappen (11, 12) aufgenommen sind, welche in Längsnuten innerhalb von Trägern (20) gleitverstellbar sind, die im Innern des Gehäuses fest angebracht sind.

5. Bremse nach Anspruch 1, dadurch gekennzeichnet, daß das Mutterschraubensystem eine Schraube (103) umfaßt, die durch zwei gegenüberliegende Teile (103a, 103b) entgegengesetzt verlaufender Gewinde gebildet ist, die sich beiderseits des Zahnrads (102) erstrecken, und aus einem zentralen Teil (103c), das mit einem Profil versehen ist, um die Drehmitnahme der Schraube durch das Rad (102) zu ermöglichen, und daß dieses System außerdem zwei Muttern (104, 105) umfaßt, die jeweils einen Teil (103a, 103b) der Schraube überdecken, sowie Mittel zum Blockieren einer Drehverstellung der Muttern, wobei diese Muttern mit jeweiligen Enden der Kabel (108, 109) verbunden sind.

6. Bremse nach Anspruch 5, dadurch gekennzeichnet, daß sie ein Zwischenstellungsritzel (124) umfaßt, welches zwischen einem Ritzel (115) am Ausgang des Motors (116) und dem Zahnrad (102) angebracht ist, mit welchen es im Eingriff steht.

7. Bremse nach Anspruch 5 oder 6, dadurch gekennzeichnet, daß die Muttern (104, 105) mit Köpfen (104a, 105a) versehen sind, in welchen Lager (104b, 105b) gebildet sind, die jeweils eine Nuß (106, 107) zur Befestigung des Endes des entsprechenden Kabels (108, 109) umfassen, und daß rohrförmige Hülsenanschläge (121, 122) auf das Gehäuse (101) gepreßt bzw. geschrumpft sind und jeweils durch das jeweilige Kabel durchsetzt sind, um als Anschläge für Hülsen (113, 114) zu dienen, welche die Kabel am Ende des Gehäuses umschließen.

8. Bremse nach Anspruch 7, dadurch gekennzeichnet, daß die Mittel zur Drehblockade der Muttern (104, 105) Vorsprünge (104c) umfassen, welche an den Schrauben seitlich vorspringen und in Längsnuten (120a, 120b) gleitverstellbar sind, die in der Innenwand des Gehäuses (101) gebildet sind, wobei Anschläge (125) zur Begrenzung der Bewegung der Vorsprünge und der Muttern an den Enden der Nuten vorgesehen sind.

9. Bremse nach Anspruch 9, dadurch gekennzeichnet, daß die Welle (126) des Zwischenstellungsritzels (124) ein Ende (123) aufweist, welches von der Außenseite des Gehäuses (101) zugänglich ist und mit einem Profil versehen ist, um diese Welle von der Außenseite durch ein geeignetes Werkzeug in Drehung zu versetzen, um, falls erforderlich, ein Abrücken als Hilfsmaßnahme vornehmen zu können.

10. Bremse nach einem der Ansprüche 1 bis 5, dadurch gekennzeichnet, daß der elektrische Getriebemotor (16; 116), beispielsweise von dem Typ, der für einen Fensterheber oder einen Sitz vorgesehen ist, eine Ausgangs- bzw. Abtriebswelle (10; 110) besitzt, die ein Ritzel (15; 115) trägt, welches mit dem Zahnrad (2) oder mit dem Zwischenstellungsritzel (124) kämmt.

11. Bremse nach einem der vorangehenden Ansprüche, wobei die Abschnitte der Kabel (108, 109) außerhalb des Gehäuses (1; 101) mit Hülsen (113, 114) abgedeckt sind, die mit Anschlägen auf dem Gehäuse versehen sind, dadurch gekennzeichnet, daß der eine (21) der Anschläge beispielsweise mittels eines manuellen Abziehwerkzeugs entfernbar ist, um es zu ermöglichen, daß die Hülse in das Gehäuse eindringen kann, um ein Abrücken als Hilfsmaßnahme zu ermöglichen.

12. Bremse nach einem der Ansprüche 5 bis 11, dadurch gekennzeichnet, daß das Gehäuse (101) aus zwei Gehäusehälften (101a, 101b) gebildet ist, in denen sich die Abtriebswelle (110) des Motors (16; 116), die Welle (126) des Zwischenstellungsritzels (124) und die Schraube (103) erstrecken, und daß der Motor (16; 116) an einer (101a) dieser Gehäusehälften angebracht ist, während jeder Hülsenanschlag (121, 122) auf einen Ansatz (128) jeder Gehäusehälfte geschrumpft bzw. gesteckt ist.
